# EUROPEAN PATENT SPECIFICATION

(11) **EP 4 388 352 B1**
(45) Date of publication and mention of the grant of the patent: **25.03.2026**
(21) Application number: 22755285.8
(22) Date of filing: 11.08.2022
(51) Int. Cl.: G02B 5/04, G02B 19/00, G02B 27/00, G02B 27/01

(54) **PRISMATIC COLLIMATING DEVICE**
PRISMENKOLLIMATOR
DISPOSITIF DE COLLIMATION PRISMATIQUE

(30) Priority: 16.08.2021 EP 21275114; 16.08.2021 GB 202111715
(43) Date of publication of application: 26.06.2024
(73) Proprietor: BAE SYSTEMS plc, London SW1Y 5AD (GB)
(72) Inventor: MILLS, Rory Thomas Alexander, Rochester Kent ME1 2XX (GB)
(74) Representative: BAE SYSTEMS plc Group IP Department
(86) International application number: PCT/GB2022/052095
(87) International publication number: WO 2023/021273

(56) References cited:
- US-A1- 2005 046 952
- US-A1- 2020 310 135
- US-A1- 2021 096 338
- US-B1- 6 795 042
- US-B2- 10 728 533
- US-B2- 6 493 146
- US-B2- 7 408 715
- US-B2- 9 366 870
- HUA HONG: "Past and future of wearable augmented reality displays and their applications", PROCEEDINGS OF SPIE, IEEE, US, vol. 9186, 20 October 2014 (2014-10-20), pages 91860O - 91860O, XP060045285, ISBN: 978-1-62841-730-2, DOI: 10.1117/12.2063946

## Description

### BACKGROUND

Prismatic collimating devices may be used in displays to provide image bearing light for display to a user.

US6795042B1 discloses an image display apparatus.

Hua Hong discloses at Proceedings of SPIE, IEEE, US vol. 9186, 20 October 2014 the "Past and future of wearable augmented reality displays and their applications".

US7408715B2 discloses an image display apparatus and image display system.

### BRIEF DESCRIPTION OF DRAWINGS

Figure 1 illustrates a folded prismatic collimating device according to some examples.
Figure 2 illustrates the folded prismatic collimating device shown with an illustration of the surfaces having optical power/freeform surfaces.
Figure 3 illustrates the folded prismatic collimating device with light from three point sources on an image plane.

### DETAILED DESCRIPTION

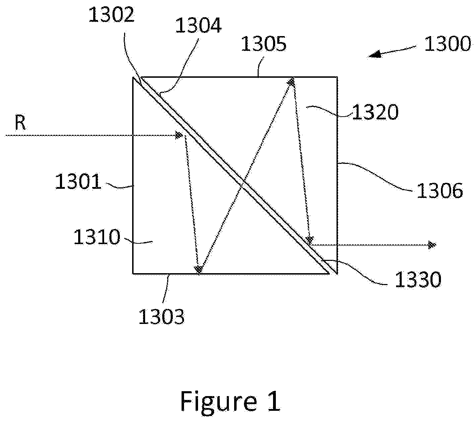

Figure 1 illustrates a folded prismatic collimating device 1300 according to some examples. The folded prismatic collimating device 1300 comprises a first prism 1310 and a second prism 1320. The first prism 1310 and the second prism are separated by an air gap 1330. For simplicity the first prism 1310 and the second prism 1320 are shown without any surface forms or curvature. However each surface of the first prism 1310 and the second prism 1320 are shaped to have optical power.

Light R interacts with a first surface 1301 of the first prism 1310 and enters the first prism 1310. The first surface 1301 of the first prism 1310 causes the light to undergo refraction towards a second surface 1302 of the first prism 1310. Due to the presence of the air gap 1330 and the angle of incidence of the light, the light that is refracted by the first surface 1301 undergoes total internal reflection (TIR) at the second surface 1302, and is reflected towards a third surface 1303. The third surface 1303 is configured to reflect light received towards the second surface 1302. Due to the angle of incidence, light received from the third surface 1303 at the second surface 1302 is output from the first prism 1310 towards the second prism 1320.

Light output from the first prism 1310 is received by the second prism 1320 at a fourth surface 1304. The light received by the fourth surface 1304 undergoes refraction, and is directed towards a fifth surface 1305. The fifth surface reflects light back towards the fourth surface 1304. Light received at the fourth surface 1304, due to the angle of incidence and the air gap 1330, undergoes total internal reflection, and is directed towards the sixth surface 1306. Light received at the sixth surface 1306 from the fourth surface is output from the second prism 1320.

Due to the optical power of each surface, light may enter the folded prismatic device 1300 and exit collimated. The collimated light may then be directed toward a further optical element and/or towards a user.

In some examples, to aid reflection the third surface 1303 and the fifth surface may be coated with a reflective mirror coating. In some examples at least one of the first surface 1301, the second surface 1302, the fourth surface 1304, and the sixth surface may be coated with an anti-reflection coating. In some examples all of the first surface 1301, the second surface 1302, the fourth surface 1304, and the sixth surface may be coated with an anti-reflection coating.

The first prism 1310 and the second prism 1320 are arranged to receive and collimate a light beam from a light source. As can be seen from Figure 1, the output surface of the first prism, (i.e. the second surface 1302) is adjacent to the input surface of the second prism (i.e the fourth surface 1304).

The first prism and second prism are arranged such that the light beam undergoes total internal reflection and refraction at both the output surface of the first prism 1310 and the input surface of the second prism 1320. Each of the first prism 1310 and second prism 1320 comprise at least three optically powered surfaces. The optical power is chosen based on the desired properties of the output light and the input light properties in a similar way to the optical power of lenses may be chosen. The surface forms, orientation and material of the prisms may be optimised to achieve the desired output parameters.

Each of the first prism 1310 and the second prism 1320 comprise a surface where the light interacts with the surface twice, and at least two surfaces where the light only interacts once.

In order to allow a small air gap 1330, the surface forms of the second surface 1303 and the fourth surface 1304 may be the same, or substantially the same. However, light that interacts with second surface 1302 the fourth surface 1304 may interact such that one is effectively concave, and the other effectively convex. The surface forms being the same allows the air gap 1330 to be kept constant, and also may reduce the complexity of aligning the prisms.

In some examples the air gap 1330 may be less than 1 mm. In some examples the air gap 1330 may be within a range of 0.25 mm to 0.5 mm. The lower range is based on the tolerance of maintaining the gap. A lower bound for the air gap 1330 may be of order of 100s of nm, as below 100s of nm issues like interference or evanescent coupling may occur. The size of the air gap may also be dictated by the overall size of the device where a smaller device requires a smaller air gap.

In some examples the first prism 1310 and the second prism 1320 may have a substantially triangular cross-section.

Figure 1 shows the folded prismatic collimating device 1300 receiving a single ray of light R from a single source (not shown). However, this is for ease of viewing the Figure. It is to be understood that the folded prismatic collimating device may be configured to receive light from any number of light sources. In some examples the light sources may comprise point light sources. The drawings illustrate the light source as comprising three point light sources (e.g. P0, P1, P2) however this is merely for ease of viewing. In some examples the light source comprises a plurality of sources, which may be arranged as an array of point sources. Sets of sources within the plurality of sources may correspond with particular colours. For example a first set of light sources in an array may provide green light, whereas a second and third set in the array may provide blue and red light respectively.

In some examples the folded prismatic collimating device 1300 may output a light beam having a common exit pupil in both a vertical and horizontal axis. In some examples the folded prismatic collimating device 1300 may output a light beam having an uncommon exit pupil in a vertical and horizontal axis, such that the light beam that is output has a different waist point for the vertical and horizontal axis.

In some examples**,** not forming part of the claimed invention, the first prism 1310 and the second prism 1320 may be bonded together, for example by an adhesive. The air gap 1330 may be replaced by a bonding layer or another low refractive index coating.

In some examples, the prisms may comprise alignment features, to reduce the complexity of aligning the prisms.

In some examples, the at least one of the first surface 1301, second surface 1302, third surface 1303, fourth surface 1304, fifth surface 1305 and sixth surface 1306 may have a surface form substantially defined by at least one of: a spherical surface definition, an aspheric surface definition, a biconical surface definition, or a high order polynomial definition. In this context high may mean an order of ten or more.

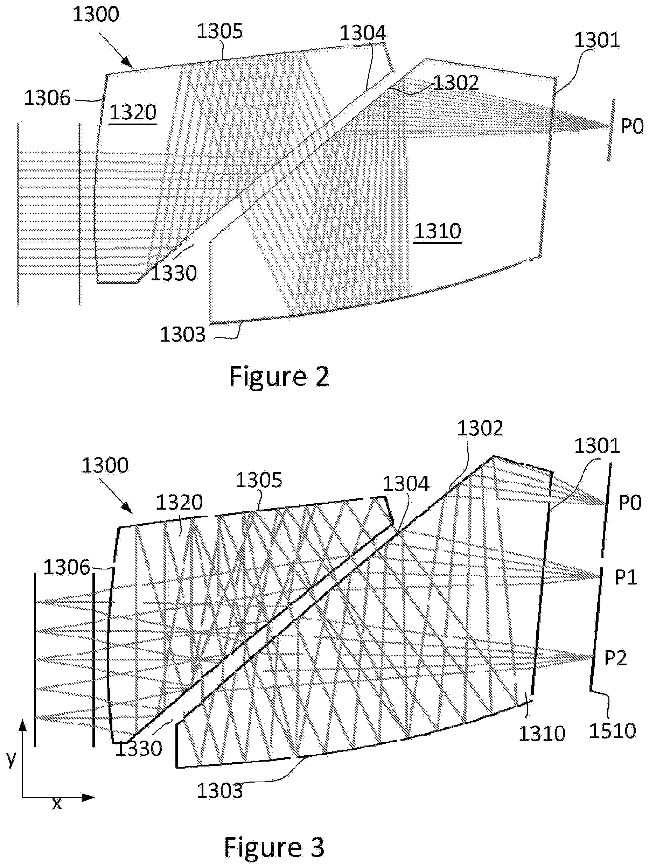

Figure 2 illustrates the folded prismatic collimating device 1300, however unlike Figure 1 it is shown with the surfaces having optical power/freeform surfaces and also shows more ray traces. Light entering the folded prismatic collimating device 1300 is shown from a single point source P0 for ease of viewing, however as stated above any number of light sources may be used.

Figure 3 illustrates the folded prismatic collimating device 1300 with light from three point sources P0, P1, P2 on an image plane 1510. Unlike Figure 2, Figure 3 shows the exit pupil comprising a FOV in the y axis of the folded prismatic collimating device 1300. The FOV in the y axis is the main factor in the height of the folded prismatic collimating device 1300. Similarly, a FOV in the x axis of the image is the main factor in the width of the folded prismatic collimating device 1300.

A high order polynomial may be a polynomial with at least 10 terms.

## Claims

1. A prismatic collimating device (1300) to collimate image bearing light, the prismatic collimating device comprising:
a first prism (1310) and a second prism (1320);
the first prism (1310) comprising a first surface (1301), a second surface (1302) and a third surface (1303),
the first surface (1301) configured to receive and refract image bearing light, from an image source, towards the second surface (1302),
the second surface (1302) configured to reflect light by total internal reflection, the light received from the first surface (1301), towards the third surface (1303), and refract light received, from the third surface (1303), towards the second prism (1320),
the third surface configured to reflect light received, from the second surface (1302), towards the second surface (1302); and
the second prism (1320) comprising a fourth surface (1304), a fifth surface (1305) and a sixth surface (1306),
the fourth surface (1304) configured to receive and refract light, received from the third surface (1303), towards the fifth surface (1305), and reflect light by total internal reflection, the light received from the fifth surface (1305), towards the sixth surface (1306),
the fifth surface configured to receive light, from the fourth surface (1304), and reflect towards the fourth surface (1304),
the sixth surface (1306) configured to receive and refract light, providing a collimated output, received from the fourth surface (1304);
wherein the first surface (1301), second surface (1302), third surface (1303), fourth surface (1304), fifth surface (1305) and sixth surface (1306) are optically powered, and an air gap (1330) is provided between the second surface (1302) and the fourth surface (1304),
wherein the second surface (1302) and the fourth surface (1304) have a substantially similar surface form, and
wherein the air gap size is constant and less than 1 mm.

2. The prismatic collimating device according to claim 1, wherein the first prism and the second prism have a substantially triangular cross-section.

3. The prismatic collimating device according to any preceding claim, further comprising a light source comprising a set of point sources, and optionally comprising a plurality of sets of point sources, wherein each set of the plurality of sets of point sources comprise a different colour.

4. The prismatic collimating device according to any preceding claim, wherein an exit pupil of collimated output comprises common coordinates in a horizontal axis and a vertical axis

5. The prismatic collimating device according to any of claims 1-4, wherein an exit pupil of the prismatic collimating device has common coordinates in only one of a horizontal axis and a vertical axis.

6. The prismatic collimating device according to any preceding claim, wherein at least one of the first surface, second surface and third surface have a substantially similar surface form to at least one of the fourth surface, fifth surface and sixth surface.

7. The prismatic collimating device according to any preceding claim, wherein at least one of the first surface, second surface, fourth surface, and sixth surface is coated with an anti-reflection coating.

8. The prismatic collimating device according to any preceding claim, wherein the first prism and the second prism further comprise alignment features.

9. The prismatic collimating device according to any preceding claim, wherein at least one of the first surface, second surface, third surface, fourth surface, fifth surface and sixth surface having a surface form substantially defined by at least one of: a spherical surface definition, an aspheric surface definition, a biconical surface definition, or a high order polynomial definition.

10. The prismatic collimating device according to any preceding claim, wherein the second surface is configured to reflect light received from a first range of angles, and transmit light received from a second range of angles, wherein the first range of angles and the second range of angles have substantially zero overlap.

11. The prismatic collimating device according to any preceding claim, wherein the fourth surface is configured to reflect light received from a third range of angles, and transmit light received from a fourth range of angles, wherein the third range of angles and the fourth range of angles have substantially zero overlap.

## Patentansprüche

1. Prismatische Kollimationsvorrichtung (1300), um bildtragendes Licht zu kollimieren, die prismatische Kollimationsvorrichtung umfassend:
ein erstes Prisma (1310) und ein zweites Prisma (1320);
das erste Prisma (1310) umfassend eine erste Oberfläche (1301), eine zweite Oberfläche (1302) und eine dritte Oberfläche (1303),
wobei die erste Oberfläche (1301) konfiguriert ist, um bildtragendes Licht, von einer Bildquelle, zu empfangen und in Richtung der zweiten Oberfläche (1302) zu brechen,
die zweite Oberfläche (1302) konfiguriert ist, um Licht durch innere Totalreflexion, wobei das Licht von der ersten Oberfläche (1301) empfangen wird, in Richtung der dritten Oberfläche (1303) zu reflektieren und empfangenes Licht, von der dritten Oberfläche (1303), in Richtung des zweiten Prismas (1320) zu brechen,
die dritte Oberfläche konfiguriert ist, um empfangenes Licht, von der zweiten Oberfläche (1302), in Richtung der zweiten Oberfläche (1302) zu reflektieren; und
das zweite Prisma (1320) umfassend eine vierte Oberfläche (1304), eine fünfte Oberfläche (1305) und eine sechste Oberfläche (1306),
wobei die vierte Oberfläche (1304) konfiguriert ist, um Licht, das von der dritten Oberfläche (1303) empfangen wird, zu empfangen und in Richtung der fünften Oberfläche (1305) zu brechen, und Licht durch Totalreflexion, wobei das Licht von der fünften Oberfläche (1305) empfangen wird, in Richtung der sechsten Oberfläche (1306) zu reflektieren,
die fünfte Oberfläche konfiguriert ist, um Licht, von der vierten Oberfläche (1304), zu empfangen und in Richtung der vierten Oberfläche (1304) zu reflektieren,
die sechste Oberfläche (1306) konfiguriert ist, um Licht, das eine kollimierte Ausgabe bereitstellt, das von der vierten Oberfläche (1304) empfangen wird, zu empfangen und zu brechen;
wobei die erste Oberfläche (1301), die zweite Oberfläche (1302), die dritte Oberfläche (1303), die vierte Oberfläche (1304), die fünfte Oberfläche (1305) und die sechste Oberfläche (1306) optisch gespeist sind, und ein Luftspalt (1330) zwischen der zweiten Oberfläche (1302) und der vierten Oberfläche (1304) bereitgestellt ist,
wobei die zweite Oberfläche (1302) und die vierte Oberfläche (1304) eine im Wesentlichen ähnliche Oberflächenform aufweisen und
wobei die Luftspaltgröße konstant und kleiner als 1 mm ist.

2. Prismatische Kollimationsvorrichtung nach Anspruch 1, wobei das erste Prisma und das zweite Prisma einen im Wesentlichen dreieckigen Querschnitt aufweisen.

3. Prismatische Kollimationsvorrichtung nach einem der vorstehenden Ansprüche, ferner umfassend eine Lichtquelle, umfassend einen Satz von Punktquellen, und optional umfassend eine Vielzahl von Sätzen von Punktquellen, wobei jeder Satz der Vielzahl von Sätzen von Punktquellen eine unterschiedliche Farbe umfasst.

4. Prismatische Kollimationsvorrichtung nach einem der vorstehenden Ansprüche, wobei eine Austrittspupille der kollimierten Ausgabe gemeinsame Koordinaten in einer horizontalen Achse und einer vertikalen Achse umfasst.

5. Prismatische Kollimationsvorrichtung nach einem der Ansprüche 1 bis 4, wobei eine Austrittspupille der prismatischen Kollimationsvorrichtung gemeinsame Koordinaten in nur einer von einer horizontalen Achse und einer vertikalen Achse aufweist.

6. Prismatische Kollimationsvorrichtung nach einem der vorstehenden Ansprüche, wobei mindestens eine der ersten Oberfläche, der zweiten Oberfläche und der dritten Oberfläche eine im Wesentlichen ähnliche Oberflächenform wie mindestens eine der vierten Oberfläche, der fünften Oberfläche und der sechsten Oberfläche aufweist.

7. Prismatische Kollimationsvorrichtung nach einem der vorstehenden Ansprüche, wobei mindestens eine der ersten Oberfläche, der zweiten Oberfläche, der vierten Oberfläche und der sechsten Oberfläche mit einer Antireflexionsbeschichtung beschichtet ist.

8. Prismatische Kollimationsvorrichtung nach einem der vorstehenden Ansprüche, wobei das erste Prisma und das zweite Prisma ferner Ausrichtungsmerkmale umfassen.

9. Prismatische Kollimationsvorrichtung nach einem der vorstehenden Ansprüche, wobei mindestens eine der ersten Oberfläche, der zweiten Oberfläche, der dritten Oberfläche, der vierten Oberfläche, der fünften Oberfläche und der sechsten Oberfläche eine Oberflächenform aufweist, die im Wesentlichen durch mindestens eine definiert ist von: einer sphärische Oberflächendefinition, einer asphärische Oberflächendefinition, einer doppelkonische Oberflächendefinition oder einer polynomiale Definition höherer Ordnung.

10. Prismatische Kollimationsvorrichtung nach einem der vorstehenden Ansprüche, wobei die zweite Oberfläche konfiguriert ist, um Licht, das von einem ersten Winkelbereich empfangen wird, zu reflektieren und Licht, das von einem zweiten Winkelbereich empfangen wird, durchzulassen, wobei der erste Winkelbereich und der zweite Winkelbereich im Wesentlichen keine Überlappung aufweisen.

11. Prismatische Kollimationsvorrichtung nach einem der vorstehenden Ansprüche, wobei die vierte Oberfläche konfiguriert ist, um Licht, das von einem dritten Winkelbereich empfangen wird, zu reflektieren und Licht, das von einem vierten Winkelbereich empfangen wird, durchzulassen, wobei der dritte Winkelbereich und der vierte Winkelbereich im Wesentlichen keine Überlappung aufweisen.

## Revendications

1. Dispositif de collimation prismatique (1300) pour collimater de la lumière porteuse d'image, le dispositif de collimation prismatique comprenant :
un premier prisme (1310) et un second prisme (1320) ;
le premier prisme (1310) comprenant une première surface (1301), une deuxième surface (1302) et une troisième surface (1303),
la première surface (1301) étant conçue pour recevoir et réfracter de la lumière porteuse d'image, provenant d'une source d'image, en direction de la deuxième surface (1302),
la deuxième surface (1302) étant conçue pour réfléchir par réflexion interne totale de lumière, la lumière reçue en provenance de la première surface (1301), en direction de la troisième surface (1303), et réfracter la lumière reçue, en provenance de la troisième surface (1303), en direction du second prisme (1320),
la troisième surface étant conçue pour réfléchir la lumière reçue, en provenance de la deuxième surface (1302), en direction de la deuxième surface (1302) ; et
le second prisme (1320) comprenant une quatrième surface (1304), une cinquième surface (1305) et une sixième surface (1306),
la quatrième surface (1304) étant conçue pour recevoir et réfracter la lumière, reçue en provenance de la troisième surface (1303), en direction de la cinquième surface (1305), et réfléchir par réflexion interne totale de lumière, la lumière reçue en provenance de la cinquième surface (1305), en direction de la sixième surface (1306),
la cinquième surface étant conçue pour recevoir la lumière, en provenance de la quatrième surface (1304), et réfléchir en direction de la quatrième surface (1304),
la sixième surface (1306) étant conçue pour recevoir et réfracter la lumière, fournissant une sortie collimatée, reçue en provenance de la quatrième surface (1304) ;
dans lequel la première surface (1301), la deuxième surface (1302), la troisième surface (1303), la quatrième surface (1304), la cinquième surface (1305) et la sixième surface (1306) sont optiquement alimentées en puissance, et un espace d'air (1330) est fourni entre la deuxième surface (1302) et la quatrième surface (1304),
dans lequel la deuxième surface (1302) et la quatrième surface (1304) ont une forme de surface sensiblement similaire, et
dans lequel la taille d'espace d'air est constante et inférieure à 1 mm.

2. Dispositif de collimation prismatique selon la revendication 1, dans lequel le premier prisme et le second prisme ont une section transversale sensiblement triangulaire.

3. Dispositif de collimation prismatique selon l'une quelconque revendication précédente, comprenant en outre une source de lumière comprenant un ensemble de sources ponctuelles, et comprenant facultativement une pluralité d'ensembles de sources ponctuelles, dans lequel chaque ensemble de la pluralité d'ensembles de sources ponctuelles comprend une couleur différente.

4. Dispositif de collimation prismatique selon l'une quelconque revendication précédente, dans lequel une pupille de sortie de sortie collimatée comprend des coordonnées communes dans un axe horizontal et un axe vertical

5. Dispositif de collimation prismatique selon l'une quelconque des revendications 1 à 4, dans lequel une pupille de sortie du dispositif de collimation prismatique a des coordonnées communes dans un seul parmi un axe horizontal et un axe vertical.

6. Dispositif de collimation prismatique selon l'une quelconque revendication précédente, dans lequel au moins l'une parmi la première surface, la deuxième surface et la troisième surface ont une forme de surface sensiblement similaire à au moins l'une parmi la quatrième surface, la cinquième surface et la sixième surface.

7. Dispositif de collimation prismatique selon l'une quelconque revendication précédente, dans lequel au moins l'une parmi la première surface, la deuxième surface, la quatrième surface et la sixième surface est revêtue d'un revêtement antireflet.

8. Dispositif de collimation prismatique selon l'une quelconque revendication précédente, dans lequel le premier prisme et le second prisme comprennent en outre des caractéristiques d'alignement.

9. Dispositif de collimation prismatique selon l'une quelconque revendication précédente, dans lequel au moins l'une parmi la première surface, la deuxième surface, la troisième surface, la quatrième surface, la cinquième surface et la sixième surface ont une forme de surface sensiblement définie par au moins l'une parmi : une définition de surface sphérique, une définition de surface asphérique, une définition de surface biconique ou une définition polynomiale d'ordre élevé.

10. Dispositif de collimation prismatique selon l'une quelconque revendication précédente, dans lequel la deuxième surface est conçue pour réfléchir de la lumière reçue en provenance d'une première plage d'angles, et transmettre de la lumière reçue en provenance d'une deuxième plage d'angles, dans lequel la première plage d'angles et la deuxième plage d'angles ont un chevauchement sensiblement nul.

11. Dispositif de collimation prismatique selon l'une quelconque revendication précédente, dans lequel la quatrième surface est conçue pour réfléchir de la lumière reçue en provenance d'une troisième plage d'angles, et transmettre de la lumière reçue en provenance d'une quatrième plage d'angles, dans lequel la troisième plage d'angles et la quatrième plage d'angles ont un chevauchement sensiblement nul.
